# EUROPEAN PATENT SPECIFICATION

(11) **EP 3 209 111 B1**
(45) Date of publication and mention of the grant of the patent: **01.08.2018**
(21) Application number: 14790554.1
(22) Date of filing: 20.10.2014
(51) Int. Cl.: A01G 3/025

(54) **PRUNING TOOL**
ASTSCHERE
OUTIL DE TAILLE

(43) Date of publication of application: 30.08.2017
(73) Proprietor: Husqvarna AB, 561 82 Huskvarna (SE)
(72) Inventor: KOHL, Peter, 89257 Illertissen (DE)
(74) Representative: Finkele, Rolf
(86) International application number: PCT/EP2014/072457
(87) International publication number: WO 2016/062329

(56) References cited:
- EP-A1- 0 895 712
- US-A- 3 623 222
- US-A1- 2009 038 162

## Description

### TECHNICAL FIELD

The present invention relates to pruning tools, and more particularly to a pruning tool, such as a branch pruner, a lopper, and secateurs, with an elongated pole for pruning tree branches, twigs and shrubs.

### BACKGROUND

Pruning tools, such as branch pruners, loppers, secateurs, with an elongated pole, are well known in the art and are generally used for pruning twigs and branches in gardening and forestry applications. These pruning tools offers an easier cutting experience of branches and leaves in dense bushes and trees which may be high-lying. Typically, a pruning tool includes a working implement with at least one movable component in the working implement, an elongated pole attached to the working implement, and a pull-cord having a first end operably connected to the working implement and a second end attached to a pulling member or an actuation handle. The actuation handle is configured to transmit a pulling force via the pull-cord to the cutting assembly to actuate the movable component.

Occasionally, an operator is require to adjust the pulling force applied on the pulling member or the actuation handle to sever twigs or branches with varying diametrical sizes and/or with irregular orientation. Customarily, to sever a relatively thick twig or branch may require a large pulling force as compared to the pulling force required to sever a relatively thin twig or branch. Moreover, based on the type of bush to be severed the operator is required to adjust the pulling force applied for similar diametrical size and/or orientation of the twig or branch. It is increasingly troublesome for the operator to occasionally adjust the pulling force while an ongoing pruning operation. Even for the skilled operators sudden adjustments required in the pulling forces, particularly while requiring an excessive force for pruning thick twigs or branches, may lead to less accuracy and sever the branch in the middle or a bud. This can cause more fatigue to the operator and also prolongs pruning operation cycle time per tree, shrub or bush.

U.S. Patent 5, 950, 315 (the '315 patent) issued on September 14, 1999 to Linden, family member of EP0895712, discloses a lopper used to perform lopping, pruning and similar operations. The lopper includes a lopping head provided with a spring-biased blade cooperating with a jaw, a drive mechanism, and an elongate housing. The drive mechanism includes first and second wheels rotatable relative thereto about a first axis. A head line couples the first wheel to the blade at a connecting point, and the second wheel is coupled to a driving line. The first wheel is eccentric relative to the second wheel so that a distance separating a region of a guiding surface of the first wheel from the first axis is smallest at a predetermined point of blade travel across a bight. Thus, imparts a variable cutting force to a branch as the blade travels across the bight, the variable cutting force increases to a predetermined point of travel of the blade across the bight even when a constant force is applied to the driving line. The lopper also includes an intermediate handle and a lower handle selectively operable to actuate the blade relative to the jaw.

The '315 patent suggests a variable force mechanism that can provide an increased leverage at the predetermined point during the cutting stroke corresponding to the maximum resistance while cutting of the branch. However, the '315 patent does not teach or suggest by what means an adjustment to the pulling force is performed by the operator while severing the twigs or branches with varying diametrical sizes and/or with irregular orientation.

Therefore, in light of the foregoing, there is a need for an improved pruning tool for pruning twigs and branches in gardening and forestry applications.

### SUMMARY

In view of the above, it is an objective of the present invention to solve or at least reduce the problems discussed above. The objective is at least partially achieved according to a pruning tool according to claim 1 of the present invention. The pruning tool includes a working implement having at least one movable component. The pruning tool further includes an elongated pole attached to the working implement and a slidable pulley arrangement. The slidable pulley arrangement slidably disposed with respect to the elongated pole and wherein a sliding movement of the slidable pulley arrangement is configured to actuate the working implement. The slidable pulley arrangement supports pull-cord passing around thereof and have a first end and a second end. Further, a first actuation handle and a second actuation handle are provided with the pruning tool such that the first end of the pull-cord attached to the first actuation handle and the second end of the pull-cord attached to the second actuation handle. According to the present invention, during a first cutting action performed by pulling the first actuation handle the second actuation handle is configured to move along with the first actuation handle, and during a second cutting action performed by pulling the second actuation handle the second actuation handle is configured to move while the movement of the first actuation handle is restricted. During the first cutting action, an operator applies a less cutting force by pulling the first actuation handle to sever relatively thin and small branches. While, during the second cutting action, the operator applies a more cutting force by pulling the second actuation handle to sever relatively thick and large branches. However, according an aspect of the present disclosure, the pulling force or downward pull required during the first cutting action and the second cutting action is substantially equal and thus the operator is not require to adjust the pulling force applied on the first and second actuation handles to sever twigs or branches with varying diametrical sizes and/or with irregular orientation.

Preferred embodiments of the invention are defined in the dependent claims.

The first and second actuation handles are embodied as movable sleeves which are configured to slide over the elongated pole. The pruning tool further includes a stopper means to restrict the movement of the first actuation handle during the second cutting action while the pull-cord transmits the tension around the pulley block. Further, the stopper means is an integral stopper means provided with the first actuation handle and facilitate a swift and smooth switch from the first cutting action to the second cutting action by dynamically locking the first actuation handle at a desired location on the elongated pole. In an alternative embodiment, the first and second actuation handles are embodied as actuation knobs which are configured to pull away from the elongated pole.

The working implement of the pruning tool is a cutting assembly having at least one movable blade and a stationary blade wherein the movable blade is pivotally connected to the stationary blade. Furthermore, a drive mechanism operatively connected to the at least one movable blade and configured to actuate the working implement during the first cutting action and the second cutting action.

### BRIEF DESCRIPTION OF THE DRAWINGS

The invention will be described in more detail with reference to the enclosed drawings, wherein:
FIG. **1A** illustrates a perspective view of a pruning tool, according to an embodiment of the present invention;
FIG. **1B** illustrates the pruning tool of FIG. **1A** in during a first cutting action;
FIG. **1C** illustrates the pruning tool of FIG. **1A** in during a second cutting action;
FIG. **2** illustrates an exploded view of a pruning tool, according to another embodiment of the present invention;
FIG. **3** illustrates an exploded view of a pruning tool, according to yet another embodiment of the present invention; and
FIG. **4** illustrates a side view of a pruning tool, according to yet another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention, as defined in the appended claims, to those skilled in the art. In the drawings, like numbers refer to like elements.

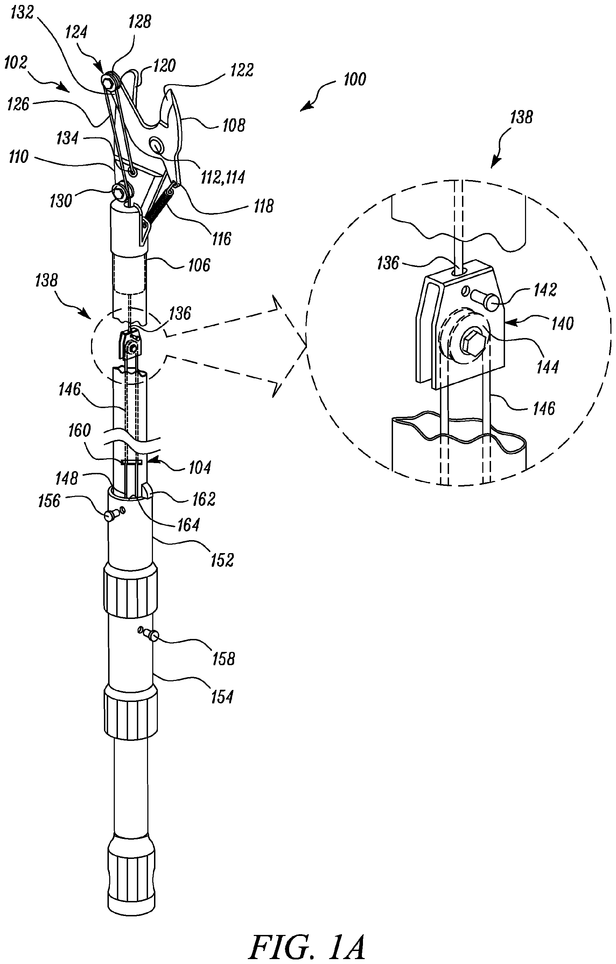

FIGS. **1A** to **1C** illustrate a perspective view of a pruning tool **100,** according to an embodiment of the present invention. The pruning tool **100** as illustrated in FIGS. **1A** to **1C** is a pruning lopper used for pruning twigs and branches of trees. In various other embodiments, the pruning tool **100** may be any other type of manually actuated tool with an elongated pole, for example, a lopper, secateurs, a plier, a gripper or manipulator etc. for performing trimming, cutting, or pruning operations.

The pruning tool **100** includes a working implement **102** mounted to an elongated pole **104** at a first end **106** thereof. The elongated pole **104** may be a unitary hollow tube like structure forming an elongated housing made of aluminum or any light-metal alloy and configured to provide quick and easy cutting action for the high-lying branches. In an embodiment, the elongated pole **104** may have a telescopic structure including one or more hollow tubes. In the illustrated embodiment, the working implement **102** is embodied as a cutting assembly and includes a blade arrangement with at least one movable component, embodied as a movable blade **108.** The movable blade **108** is pivotally connected to a stationary blade **110** by a pivoting arrangement **112** such that the movable blade **108** is configured to perform a pivotal movement with respect to the stationary blade **110** about a pivot pin **114** during a cutting action.

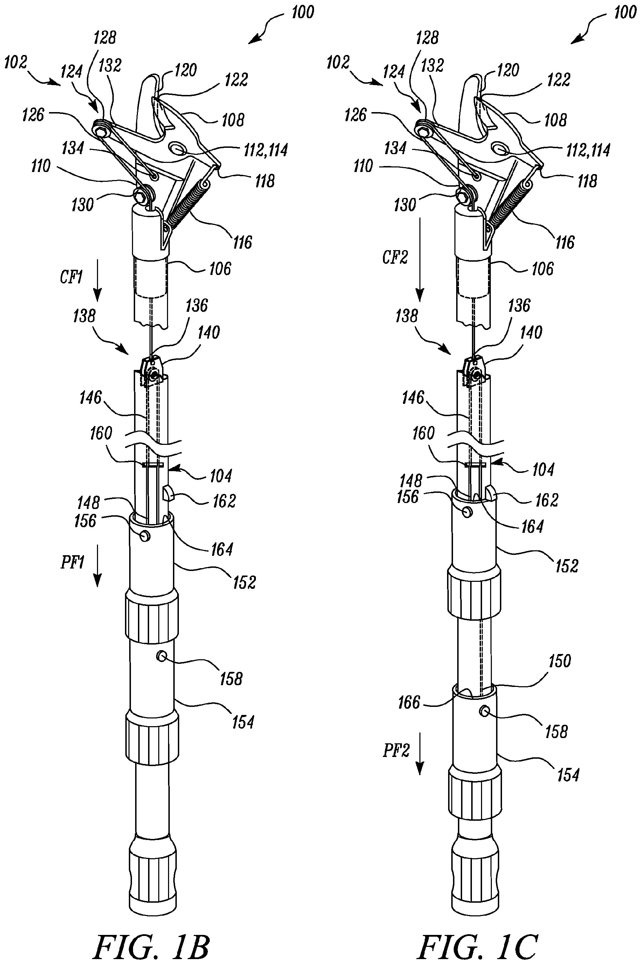

The movable blade **108** may be biased towards an open position of the working implement **102** (as illustrated in FIG. **1A**) by an elastic member **116** disposed between a lower end **118** of the movable blade **108** and the stationary blade **110.** In the illustrated embodiment, the elastic member **116** is embodied as a coil spring. However, the elastic member **116** may be any other type of resilient member known in the art, for example, a recoil spring, a volute spring, a rubber member, or the like. Alternatively, the movable blade **108** may be connected to the stationary blade **110** in such a way, so as to perform a linear movement with respect to the stationary blade **110** during the cutting action. Further, the stationary blade **110** and the movable blade **108** may include cutting edges **120** and **122,** respectively. The cutting edges **120** and **122** may be sharpened and/or be serrated in order to cut the branches. In various other embodiments, the movable blade **108** may include two or more movable components. Furthermore, the various details of the working implement **102,** as illustrated in the FIG. **1****,** are exemplary in nature, and the working implement **102** may have any other type or design within the scope of the present invention.

The working implement **102** may include a drive mechanism **124** operatively connected to the movable blade **108** of the working implement **102.** According to an embodiment of the present invention, the drive mechanism **124** may include a drive-cord **126** and a transmission mechanism such as a fixed pulley arrangement having a first fixed pulley **128** and a second fixed pulley **130.** In the illustrated embodiment, the first fixed pulley **128** is mounted to the movable blade **108** at an upper end **132** thereof and the second fixed pulley **130** is mounted to the stationary blade **110.** The first and second fixed pulleys **128, 130** include one or more grooves and the drive-cord **126** is wound around the grooves forming one or more loops between the first and second fixed pulleys **128, 130.** In various other embodiments, the drive mechanism **124** may include a lever arrangement, a linkage system, a gear arrangement, a belt drive, a chain drive, a pneumatic arrangement, a hydraulic arrangement, or a combination thereof without limiting the scope of the present invention.

According to the illustrated embodiment of the present invention, the drive-cord **126** has a first end **134** secured to the stationary blade **110** and a second end **136** of the drive-cord **126** pass around the first and second fixed pulleys **128, 130** and secured to a slidable pulley arrangement **138** provided with the pruning tool **100.** The slidable pulley arrangement **138** is slidably disposed with respect to the elongated pole **104** and wherein a sliding movement of the slidable pulley arrangement **138** is configured to actuate the working implement **102** via the drive mechanism **124.** In an embodiment, the slidable pulley arrangement **138** may include a primary pulley block **140** disposed inside the hollow elongated pole **104** and the drive-cord **126** is connected to the primary pulley block **140** by a locking pin **142.**

According to an embodiment of the present invention, the primary pulley block **140** includes a pulley member **144** to support a pull-cord, such as a primary pull-cord **146.** The primary pull-cord **146** may pass around the pulley member **144** and has a first end **148** and a second end **150** (see FIG. **1C**). The pruning tool **100** further includes a first actuation handle **152** and a second actuation handle **154.** In an embodiment, the first end **148** of the primary pull-cord **146** is attached to the first actuation handle **152** and the second end **150** of the primary pull-cord **146** is attached to the second actuation handle **154** (see FIG. **1C**). The first and the second actuation handles **152, 154** are embodied as movable sleeves fitted over the elongated pole **104** and are configured to slide over the elongated pole **104.** Furthermore, an annular flange **164** of the first actuation handle **152** may conform to an annular flange **166** (see FIG. **1C**) of the second actuation handle **154.**

In an embodiment, the first and second ends **148, 150** of the primary pull-cord **146** may pass through a slot or opening **160** provided on the elongated pole **104** and run along an outer surface of the elongated pole **104.** Moreover, the first and second ends **148, 150** may have loops to receive respective locking pins **156, 158** while attaching with the first actuation handle **152** and the second actuation handle **154,** respectively. It will be apparent to a person having ordinary skill in the art that the attachment of the first and second ends **148, 150** of the primary pull-cord **146** with the first actuation handle **152** and the second actuation handle **154** in the illustrated embodiment is exemplary in nature and may vary based on the design and application of the pruning tool **100.**

Furthermore, the elongated pole **104** may include a stopper means **162** to restrict an upward movement of the first actuation handle **152.** The stopper means **162** may be a wedge-shaped member (as shown in FIGS. **1A** to **1C**) or an annular protrusion integrally formed on the elongated pole **104** and configured to abut with the annular flange **164** of the first actuation handle **152.** Otherwise, the stopper means **162** may be an external member such as an annular ring or band attached to the elongated pole **104.** Alternatively, the stopper means **162** may be an integral stopper means provided with the first actuation handle **152.** The integral stopper means may include an arrestor and release mechanism to dynamically lock the actuation handle **152** at a desired location on the elongated pole **104.**

FIGS. **1B** and **1C** illustrate the pruning tool **100** of FIG. **1A** during a first cutting action and a second cutting action, respectively. Referring to FIG. **1B****,** the first cutting action (shown by arrow **PF1**) performed by an operator by pulling the first actuation handle **152** to sever a thin twig or branch. According to an aspect of the present invention, as the annular flanges **164, 166** of the first and second actuation handles **152, 154** are conforming, during the first cutting action the second actuation handle **154** is configured to move along with the first actuation handle **152** as an unitary handle. Thus, apply a downward pull on the primary pulley block **140** by the primary pull-cord **146** without transmitting a tension in the primary pull-cord **146** around the primary pulley block **140.** According to an embodiment of the present invention, a first pulling force **PF1** applied on the first actuation handle **152** during the first cutting action is approximately equally divided and carried by two sections of the primary pull-cord **146** via the primary pulley block **140,** as the primary pulley block **140** is pulled downward by both the ends **148, 150** of the primary pull-cord **146.** Thus, exert a first cutting force **CF1** on the drive-cord **126** substantially equivalent to the first pulling force **PF1.**

As customarily, to sever relatively thick twigs or branches may require an increased cutting force as compared to the first cutting force **CF1** exerted by the first pulling force **PF1** applied during the first cutting action performed by pulling the first actuation handle **152.** According to an aspect of the present invention, the operator may perform the second cutting action by pulling the second actuation handle **154** to sever the relatively thick twigs or branches. Referring to FIG. **1C****,** during the second cutting action (shown by arrow **PF2**) the second actuation handle **154** is configured to move and apply the downward pull on the primary pulley block **140** by pulling the second end **150** of the primary pull-cord **146.** Further, during the second cutting action, the first end **148** of the primary pull-cord **146** apply an upward pull on the first actuation handle **152** while the upward movement of the first actuation handle **152** is restricted by the stopper means **162,** and thus the primary pull-cord **146** transmits the tension around the primary pulley block **140.** According to an embodiment of the present invention, a second pulling force **PF2** applied on the second actuation handle **154** during the second cutting action is equally transmitted around the primary pulley block **140** by the primary pull-cord **146.** Thus, exert a second cutting force **CF2** on the drive-cord **126** which is approximately twice of the second pulling force **PF2.**

According to an aspect of the present invention, the operator is not require to adjust the pulling force applied on the actuation handles **152, 154** of the pruning tool **100** to sever twigs or branches with varying diametrical sizes and/or with irregular orientation. During an ongoing pruning operation, to sever the thin twig or branch using the pruning tool **100,** the operator may perform the first cutting action (see FIG. **1B**) by pulling the first actuation handle **152** and apply a comparable cutting force while not transmitting the tension in the primary pull-cord **146** around the primary pulley block **140.** Advantageously, to sever a relatively thick twig or branch using the pruning tool **100,** the operator may perform the second cutting action (see FIG. **1C**) by pulling the second actuation handle **154** and apply a double cutting force while transmitting the tension in the primary pull-cord **146** around the primary pulley block **140.** It is more convenient for the operator to occasionally not adjust the pulling force while the ongoing pruning operation. As, even for the skilled operators sudden adjustments required in the pulling forces, particularly while applying excessive force for pruning thick twigs or branches, may lead to less accuracy and sever the branch in the middle or a bud. Also, this can contribute to more fatigue to the operator and prolongs pruning operation cycle per tree, shrub or bush. The pruning tool **100,** according to an aspect of the present invention, not only increases accuracy while pruning but also causes less fatigue to the operator and reduces overall pruning operation cycle time per tree, shrub or bush.

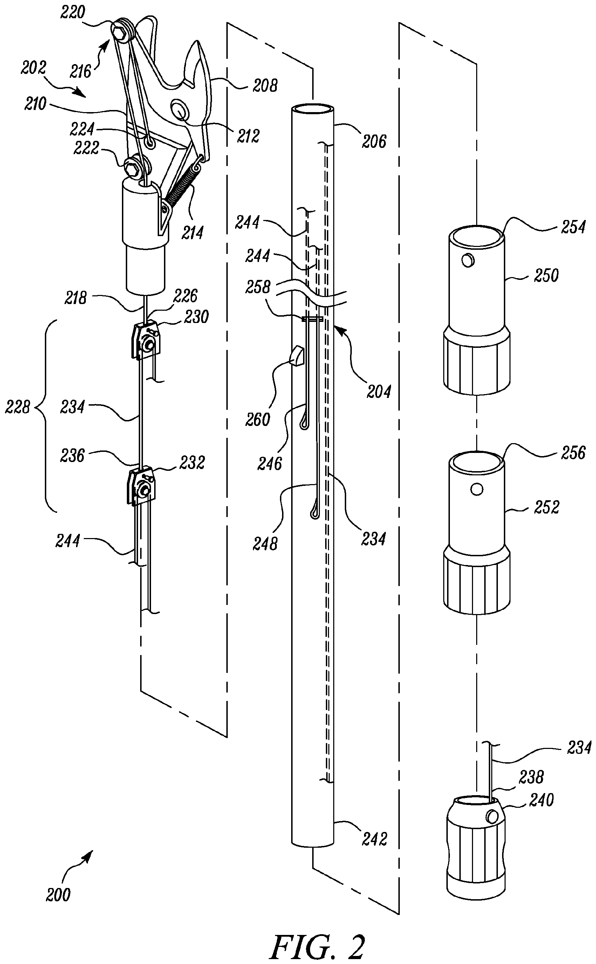

Moreover, in case of the integral stopper means provided with the first actuation handle **152** a switch from the first cutting action to the second cutting action is swift and smooth by dynamically locking the first actuation handle **152** at a desired location on the elongated pole **104** and quickly moving hand to the second actuation handle **154.** Moreover, due to presence of the integral stopper means provided with the first actuation handle **152** also reduces and/or optimizes a movement span for the second actuation handle **154** while performing the second cutting action. FIG. **2** illustrates an exploded view of a pruning tool **200,** according to another embodiment of the present invention. The pruning tool **200** includes a working implement **202** mounted to an elongated pole **204** at a first end **206** thereof. As illustrated, the working implement **202** is embodied as a cutting assembly and includes a blade arrangement with at least one movable component, embodied as a movable blade **208.** The movable blade **208** is pivotally connected to a stationary blade **210** by a pivoting arrangement **212.** Further, the movable blade **208** may be biased towards an open position of the working implement **202** (as illustrated in FIG. **2**) by an elastic member **214** disposed between the movable blade **208** and the stationary blade **210.**

The working implement **202** may include a drive mechanism **216** operatively connected to the movable blade **208** of the working implement **202.** According to an embodiment of the present invention, the drive mechanism **216** may include a drive-cord **218** and a fixed pulley arrangement having a first fixed pulley **220** and a second fixed pulley **222.** The first and second fixed pulleys **220, 222** include one or more grooves and the drive-cord **218** is wound around the grooves forming one or more loops between the first and second fixed pulleys **220, 222.**

According to the illustrated embodiment of the present invention, the drive-cord **218** has a first end **224** secured to the stationary blade **210** and a second end **226** of the drive-cord **218** pass around the first and second fixed pulleys **220, 222** and secured to a slidable pulley arrangement **228** provided with the pruning tool **200.** The slidable pulley arrangement **228** is slidably disposed with respect to the elongated pole **204** and wherein a sliding movement of the slidable pulley arrangement **228** is configured to actuate the working implement **202** via the drive mechanism **216.** In an embodiment, the slidable pulley arrangement **228** may include a primary pulley block **230** and a secondary pulley block **232** disposed inside the hollow elongated pole **204,** and the second end **226** of the drive-cord **218** is connected to the primary pulley block **230** by a locking pin.

According to an embodiment of the present invention, the primary pulley block **230** includes a pulley member (not shown) to support a primary pull-cord **234.** The primary pull-cord **234** may pass around the pulley member of the primary pulley block **230** and has a first end **236** and a second end **238.** The first end **236** of the primary pull-cord **234** is attached to the secondary pulley block **232** by a locking pin. The second end **238** of the primary pull-cord **234** run inside the elongated pole **204** and is attached to a first actuation knob **240** by another locking pin. The first actuation knob **240** is disposed at a second end **242** of the elongated pole **204** and may act as first actuation handle and configured to pull away from the elongated pole **204** to increase the reach for the working implement **202** from the ground in the pruning tool **200.** Further, an upward movement of the first actuation knob **240** is restricted by the annular flange (not shown) of the elongated pole **204** at the second end **242** thereof.

The secondary pulley block **232** also includes a pulley member (not shown) to support a secondary pull-cord **244.** The secondary pull-cord **244** may pass around the pulley member of the secondary pulley block **232** and has a first end **246** and a second end **248.** The pruning tool **200** further includes a first actuation handle **250** and a second actuation handle **252.** In an embodiment, the first end **246** of the secondary pull-cord **244** is attached to the first actuation handle **250** and the second end **248** of the secondary pull-cord **244** is attached to the second actuation handle **252.** The first and the second actuation handles **250, 252** are embodied as movable sleeves fitted over the elongated pole **204** and are configured to slide over the elongated pole **204.** Furthermore, an annular flange **254** of the first actuation handle **250** may conform to an annular flange **256** of the second actuation handle **252.**

In an embodiment, the first and second ends **246, 248** of the secondary pull-cord **244** may pass through a slot **258** provided on the elongated pole **204** and run along an outer surface of the elongated pole **204.** Moreover, the first and second ends **246, 248** of the secondary pull-cord **244** have loops to receive respective locking pins while attaching with the first actuation handle **250** and the second actuation handle **252,** respectively. Furthermore, the elongated pole **204** may include a wedge-shaped stopper means **260** to restrict an upward movement of the first actuation handle **250.**

According to an aspect of the present invention, the operator is not require to adjust the pulling force applied on the actuation handles **250, 252** and the actuation knob **240** of the pruning tool **200** to sever twigs or branches with varying diametrical sizes and/or with irregular orientation. During a pruning operation, to sever the twig or branch using the pruning tool **200,** the operator may perform the first cutting action by pulling either the first actuation handle **250** or the first actuation knob **240** by a first force and apply a double cutting force while transmitting the tension in the primary pull-cord **234** around the primary pulley block **230** only and not transmitting the tension in the secondary pull-cord **244** around the secondary pulley block **232.** Moreover, to sever a relatively thick twig or branch using the pruning tool **200,** the operator may perform the second cutting action by pulling the second actuation handle **252** by the same first force and apply a quadrupled cutting force while transmitting the tension in both of the primary pull-cord **234** and the secondary pull-cord **244** around the primary pulley block **230** and the secondary pulley block **232.**

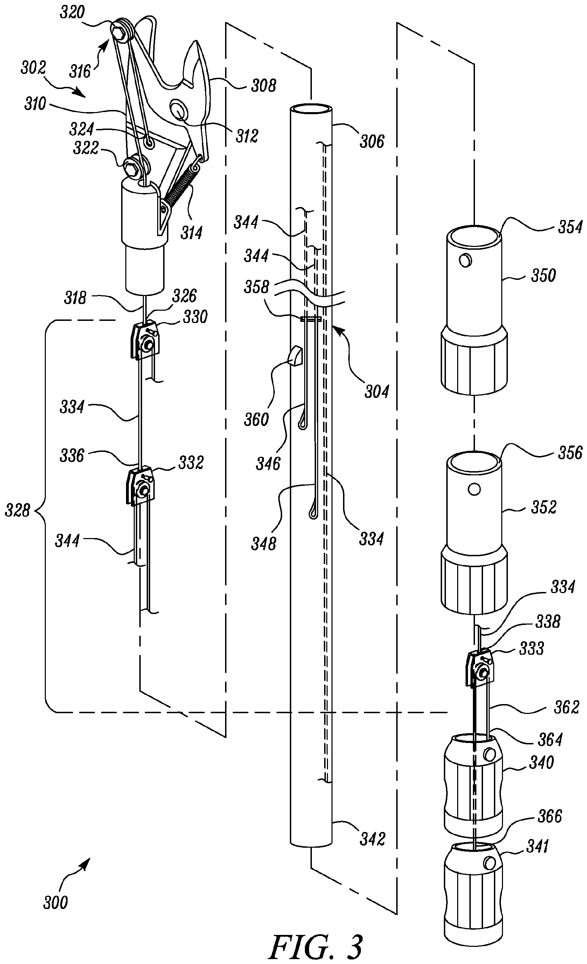

FIG. **3** illustrates an exploded view of a pruning tool **300,** according to yet another embodiment of the present invention. The pruning tool **300** includes a working implement **302** mounted to an elongated pole **304** at a first end **306** thereof. As illustrated, the working implement **302** is embodied as a cutting assembly and includes a blade arrangement with at least one movable component, embodied as a movable blade **308.** The movable blade **308** is pivotally connected to a stationary blade **310** by a pivoting arrangement **312.** Further, the movable blade **308** may be biased towards an open position of the working implement **302** (as illustrated in FIG. **3**) by an elastic member **314** disposed between the movable blade **308** and the stationary blade **310.**

The working implement **302** may include a drive mechanism **316** operatively connected to the movable blade **308** of the working implement **302.** According to an embodiment of the present invention, the drive mechanism **316** may include a drive-cord **318** and a fixed pulley arrangement having a first fixed pulley **320** and a second fixed pulley **322.** The first and second fixed pulleys **320, 322** include one or more grooves and the drive-cord **318** is wound around the grooves forming one or more loops between the first and second fixed pulleys **320, 322.**

According to the illustrated embodiment of the present invention, the drive-cord **318** has a first end **324** secured to the stationary blade **310** and a second end **326** of the drive-cord **318** pass around the first and second fixed pulleys **320, 322** and secured to a slidable pulley arrangement **328** provided with the pruning tool **300.** The slidable pulley arrangement **328** is slidably disposed with respect to the elongated pole **304** and wherein a sliding movement of the slidable pulley arrangement **328** is configured to actuate the working implement **302** via the drive mechanism **316.** In an embodiment, the slidable pulley arrangement **328** may include a primary pulley block **330,** a secondary pulley block **332** and a tertiary pulley block **333** disposed inside the hollow elongated pole **304,** and the second end **326** of the drive-cord **318** is connected to the primary pulley block **330** by a locking pin.

According to an embodiment of the present invention, the primary pulley block **330** includes a pulley member (not shown) to support a primary pull-cord **334.** The primary pull-cord **334** may pass around the pulley member of the primary pulley block **330** and has a first end **336** and a second end **338.** The first end **336** of the primary pull-cord **334** is attached to the secondary pulley block **332** by a locking pin. The second end **338** of the primary pull-cord **334** run inside the elongated pole **304** and is attached to the tertiary pulley block **333** by another locking pin.

Further, the secondary pulley block **332** also includes a pulley member (not shown) to support a secondary pull-cord **344.** The secondary pull-cord **344** may pass around the pulley member of the secondary pulley block **332** and has a first end **346** and a second end **348.** The pruning tool **300** includes a first actuation handle **350** and a second actuation handle **352.** In an embodiment, the first end **346** of the secondary pull-cord **344** is attached to the first actuation handle **350** and the second end **348** of the secondary pull-cord **344** is attached to the second actuation handle **352.** The first and the second actuation handles **350, 352** are embodied as movable sleeves fitted over the elongated pole **304** and are configured to slide over the elongated pole **304.** Further, an annular flange **354** of the first actuation handle **350** may conform to an annular flange **356** of the second actuation handle **352.**

In an embodiment, the first and second ends **346, 348** of the secondary pull-cord **344** may pass through a slot **358** provided on the elongated pole **304** and run along an outer surface of the elongated pole **304.** Moreover, the first and second ends **346, 348** of the secondary pull-cord **344** have loops to receive respective locking pins while attaching with the first actuation handle **350** and the second actuation handle **352,** respectively. The elongated pole **304** may include a wedge-shaped stopper means **360** to restrict an upward movement of the first actuation handle **350.**

Furthermore, the tertiary pulley block **333** also includes a pulley member (not shown) to support a tertiary pull-cord **362.** The tertiary pull-cord **362** may pass around the pulley member of the tertiary pulley block **333** and has a first end **364** and a second end **366.** In an embodiment, the first end **364** of the tertiary pull-cord **362** is attached to a first actuation knob **340** by a locking pin and the first end **366** of the tertiary pull-cord **362** is attached to a second actuation knob **341** by another locking pin. The first and second actuation knobs **340, 341** are disposed at a second end **342** of the elongated pole **304** and may act as first actuation handle and the second actuation handle, respectively, and configured to pull away from the elongated pole **304** to increase the reach for the working implement **302** from the ground in the pruning tool **300.** Further, an upward movement of the first actuation knob **340** is restricted by the annular flange (not shown) of the elongated pole **304** at the second end **342** thereof and the upward movement of the second actuation knob **341** is restricted by the annular flange (not shown) of the first actuation knob **340.**

According to an aspect of the present invention, the operator is not require to adjust the pulling force applied on the actuation handles **350, 352** and the actuation knobs **340, 341** of the pruning tool **300** to sever twigs or branches with varying diametrical sizes and/or with irregular orientation. During a pruning operation, to sever the twig or branch using the pruning tool **300,** the operator may perform the first cutting action by pulling either the first actuation handle **350** or the first actuation knob **340** by the first force and apply a double cutting force while transmitting the tension in the primary pull-cord **334** around the primary pulley block **330** only and not transmitting the tension in the secondary and tertiary pull-cords **344, 362** around the secondary and tertiary pulley blocks **332, 333.** Moreover, to sever a relatively thick twig or branch using the pruning tool **300,** the operator may perform the second cutting action by pulling the second actuation handle **352** or the second actuation knob **341** by the same first force and apply a quadrupled cutting force while transmitting the tension in the primary pull-cord **334** around the primary pulley block **330** and either of the secondary pull-cord **344** or the tertiary pull-cord **362** around the secondary pulley block **332** or the tertiary pulley block **333.**

In an alternative embodiment, the pruning tools **200, 300** may be embodied with a combination of one actuation handle as the movable sleeve on the elongated poles **204, 304** and two actuation knobs, an upper actuation knob and a lower actuation knob, disposed at the second end **242, 342** of the elongated pole **204, 304.** In this alternative embodiment, the first cutting action is performed by pulling either of the actuation handle or the upper actuation knob and the second cutting action is performed by pulling the lower actuation knob.

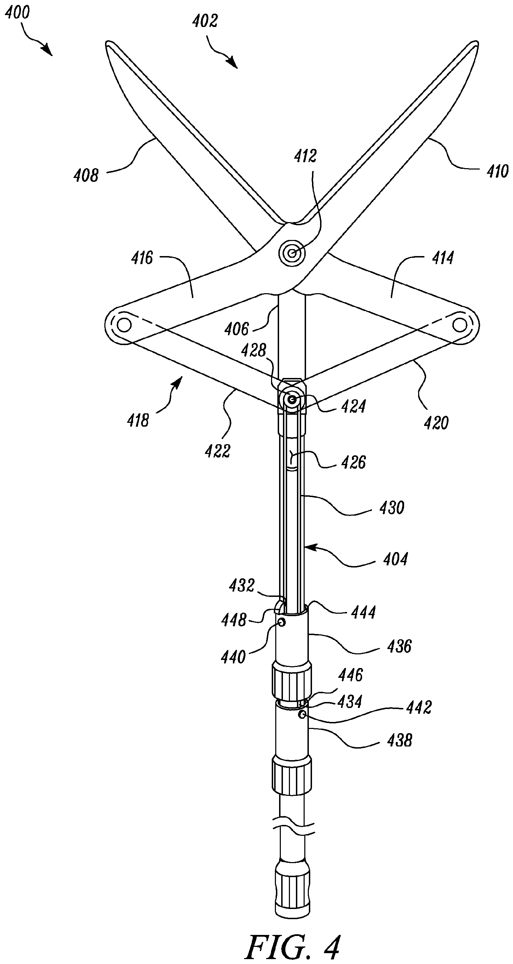

FIG. **4** illustrates a side view of a pruning tool **400,** according to yet another embodiment of the present invention. The pruning tool **400** as illustrated in FIG. **4** is a manually operable pruning shear. The pruning tool **400** includes a working implement **402** mounted to an elongated pole **404** at a first end **406** thereof. The elongated pole **404** may be a unitary tube like structure made of aluminum or any light-metal alloy and configured to provide quick and easy cutting action for the high branches. In an embodiment, the elongated pole **404** may have a telescopic structure including one or more tubular sections. As illustrated, the working implement **402** is embodied as a cutting assembly and includes a pair of movable blades **408, 410.** The blades **408, 410** may extend backward of a first pivoting connection **412** to form respective arm **414, 416.** Each of the arm **414, 416** further coupled to a linkage system **418** having a first pivoted-link **420** and a second pivoted-link **422** with a second pivoting connection **424** such that the second pivoting connection **424** may be disposed in and projecting through a longitudinal slot **426** on the elongated pole **404.** Thus a sliding movement of the second pivoting connection **424** is configured to actuate the working implement **402** via the linkage system **418.** The various details of the working implement **402,** as illustrated in the FIG. **4****,** are only exemplary in nature, and the working implement **402** may have any other type or design within the scope of the present invention.

According to an embodiment of the present invention, the second pivoting connection **424** is a slidable pulley arrangement and includes a pulley member **428** to support a pull-cord **430.** The pull-cord **430** may pass around the pulley member **428** and has a first end **432** and a second end **434.** The pruning tool **400** further includes a first actuation handle **436** and a second actuation handle **438.** In an embodiment, the first end **432** of the pull-cord **430** is attached to the first actuation handle **436** and the second end **434** of the pull-cord **430** is attached to the second actuation handle **438** by respective locking pins **440, 442.** The first and the second actuation handles **436, 438** are embodied as movable sleeves fitted over the elongated pole **404** and are configured to slide over the elongated pole **404.** Furthermore, an annular flange **444** of the first actuation handle **436** may conform to an annular flange **446** of the second actuation handle **438.**

In an embodiment, the first and second ends **432, 434** of the pull-cord **430** may run along an outer surface of the elongated pole **404** and have loops to receive respective locking pins **440, 442** while attaching with the first actuation handle **436** and the second actuation handle **438,** respectively. It will be apparent to a person having ordinary skill in the art that the attachment of the first and second ends **432, 434** of the pull-cord **430** with the first actuation handle **436** and the second actuation handle **438** in the illustrated embodiment is exemplary in nature and may vary based on the design and application of the pruning tool **400.**

Furthermore, the elongated pole **404** may include a stopper means **448** to restrict an upward movement of the first actuation handle **436.** The stopper means **448** may be a wedge-shaped member (as shown in FIG. **4**) or an annular protrusion integrally formed on the elongated pole **404** and configured to abut with the annular flange **444** of the first actuation handle **436.** Otherwise, the stopper means **448** may be an external member such as an annular ring or band attached to the elongated pole **404.**

According to an aspect of the present invention, the operator is not require to adjust the pulling force applied on the first and second actuation handles **436, 438** of the pruning tool **400** to sever twigs or branches with varying diametrical sizes and/or with irregular orientation. During a pruning operation, to sever the twig or branch using the pruning tool **400,** the operator may perform the first cutting action by pulling the first actuation handle **436** by the first force and apply a comparable shearing force while not transmitting the tension in the pull-cord **430** around the pulley member **428.** Moreover, to sever a relatively thick twig or branch using the pruning tool **400,** the operator may perform the second cutting action by pulling the second actuation handle **438** by the same first force and apply a double shearing force while transmitting the tension in the pull-cord **430** around the pulley member **428.**

The pruning tools **100, 200, 300, 400,** according to illustrated embodiments of the present invention, are configured to provide a desired cutting force based on the application of a fixed pulling force while severing the twigs or branches with varying diametrical sizes and/or with irregular orientation.

In the drawings and specification, there have been disclosed preferred embodiments and examples of the invention and, although specific terms are employed, they are used in a generic and descriptive sense only and not for the purpose of limitation of the scope of the invention being set forth in the following claims.

### PART LIST

| | |
|---|---|
| **100** | pruning tool |
| **102** | working implement |
| **104** | elongated pole |
| **106** | first end of elongated pole |
| **108** | movable blade |
| **110** | stationary blade |
| **112** | pivoting arrangement |
| **114** | pivot pin |
| **116** | elastic member |
| **118** | lower end of movable blade |
| **120** | cutting edge of stationary blade |
| **122** | cutting edge of movable blade |
| **124** | drive mechanism |
| **126** | drive-cord |
| **128** | first fixed pulley |
| **130** | second fixed pulley |
| **132** | upper end movable blade |
| **134** | first end of drive-cord |
| **136** | second end of drive-cord |
| **138** | slidable pulley arrangement |
| **140** | primary pulley block |
| **142** | locking pin |
| **144** | pulley member |
| **146** | primary pull-cord |
| **148** | first end of pull-cord |
| **150** | second end of pull-cord |
| **152** | first actuation handle |
| **154** | second actuation handle |
| **156** | locking pin |
| **158** | locking pin |
| **160** | slot |
| **162** | stopper means |
| **164** | annular flange of first actuation handle |
| **166** | annular flange of second actuation handle |
| **PF1** | first pulling force |
| **CF1** | first cutting force |
| **PF2** | second pulling force |
| **CF2** | second cutting force |
| **200** | pruning tool |
| **202** | working implement |
| **204** | elongated pole |
| **206** | first end of elongated pole |
| **208** | movable blade |
| **210** | stationary blade |
| **212** | pivoting arrangement |
| **214** | elastic member |
| **216** | drive mechanism |
| **218** | drive-cord |
| **220** | first fixed pulley |
| **222** | second fixed pulley |
| **224** | first end of drive-cord |
| **226** | second end of drive-cord |
| **228** | slidable pulley arrangement |
| **230** | primary pulley block |
| **232** | secondary pulley block |
| **234** | primary pull-cord |
| **236** | first end of primary pull-cord |
| **238** | second end of primary pull-cord |
| **240** | first actuation knob |
| **242** | second end of elongated pole |
| **244** | secondary pull-cord |
| **246** | first end of secondary pull-cord |
| **248** | second end of secondary pull-cord |
| **250** | first actuation handle |
| **252** | second actuation handle |
| **254** | annular flange of first actuation handle |
| **256** | annular flange of second actuation handle |
| **258** | slot |
| **260** | stopper means |
| **300** | pruning tool |
| **302** | working implement |
| **304** | elongated pole |
| **306** | first end of elongated pole |
| **308** | movable blade |
| **310** | stationary blade |
| **312** | pivoting arrangement |
| **314** | elastic member |
| **316** | drive mechanism |
| **318** | drive-cord |
| **320** | first fixed pulley |
| **322** | second fixed pulley |
| **324** | first end of drive-cord |
| **326** | second end of drive-cord |
| **328** | slidable pulley arrangement |
| **330** | primary pulley block |
| **332** | secondary pulley block |
| **333** | tertiary pulley block |
| **334** | primary pull-cord |
| **336** | first end of primary pull-cord |
| **338** | second end of primary pull-cord |
| **340** | first actuation knob |
| **341** | second actuation knob |
| **342** | second end of elongated pole |
| **344** | secondary pull-cord |
| **346** | first end of secondary pull-cord |
| **348** | second end of secondary pull-cord |
| **350** | first actuation handle |
| **352** | second actuation handle |
| **354** | annular flange of first actuation handle |
| **356** | annular flange of second actuation handle |
| **358** | slot |
| **360** | stopper means |
| **362** | tertiary pull-cord |
| **364** | first end of tertiary pull-cord |
| **366** | second end of tertiary pull-cord |
| **400** | pruning tool |
| **402** | working implement |
| **404** | elongated pole |
| **406** | first end of elongated pole |
| **408** | blade |
| **410** | blade |
| **412** | first pivoting connection |
| **414** | arm |
| **416** | arm |
| **418** | linkage system |
| **420** | first pivoted-link |
| **422** | second pivoted-link |
| **424** | second pivoting connection |
| **426** | longitudinal slot |
| **428** | pulley member |
| **430** | pull-cord |
| **432** | first end of pull-cord |
| **434** | second end of pull-cord |
| **436** | first actuation handle |
| **438** | second actuation handle |
| **440** | locking pin |
| **442** | locking pin |
| **444** | annular flange of first actuation handle |
| **446** | annular flange of second actuation handle |
| **448** | stopper means |

## Claims

1. A pruning tool (**100, 200, 300, 400**) comprising:
a working implement **(**102, **202, 302, 402**) having at least one movable component (**108, 208, 308, 408, 410**)**;**
an elongated pole (**104, 204, 304, 404**) attached to the working implement (**102, 202, 302, 402**)**;**
a slidable pulley arrangement (**138, 228, 328, 428**) slidably disposed with respect to the elongated pole (**104, 204, 304, 404**) and wherein a sliding movement of the slidable pulley arrangement (**138**, **228, 328, 428**) is configured to actuate the working implement (**102**, **202, 302, 402**);
at least one pull-cord (**146**, **244, 344, 362, 430**) passing around the slidable pulley arrangement (**138**, **228, 328, 428**) having a first end (**148**, **246, 346, 364, 432**) and a second end (**150**, **248, 348, 366, 434**);
a first actuation handle (**152**, **250, 350, 340, 436**), the first end (**148**, **246, 346, 364, 432**) of the pull-cord (**146**, **244, 344, 362, 430**) attached to the first actuation handle (**152**, **250, 350, 340, 436**); and
a second actuation handle (**154**, **252, 352, 341, 438**), the second end (**150**, **248, 348, 366, 434**) of the pull-cord (**146**, **244, 344, 362, 430**) attached to the second actuation handle (**154**, **252, 352, 341**, **438**),
**characterized in that**
during a first cutting action performed by pulling the first actuation handle (**152**, **250, 350, 340, 436**) the second actuation handle (**154**, **252, 352, 341, 438**) is configured to move along with the first actuation handle (**152**, **250, 350, 340, 436**), and during a second cutting action performed by pulling the second actuation handle (**154**, **252, 352, 341, 438**) the second actuation handle (**154**, **252, 352, 341, 438**) is configured to move while the movement of the first actuation handle (**152**, **250, 350, 340, 436**) is restricted.

2. The pruning tool (**100**, **200, 300, 400**) according to claim 1 comprises a stopper means (**162**, **260, 360, 448**) to restrict the movement of the first actuation handle (**152**, **250, 350, 436**) during the second cutting action.

3. The pruning tool (**100**, **200, 300, 400**) according to claim 2, wherein the stopper means (**162**, **260, 360, 448**) is an integral stopper means provided with the first actuation handle (**152**, **250, 350, 436**).

4. The pruning tool (**100**, **200, 300, 400**) according to claim 1, wherein the first actuation handle (**152**, **250, 350, 436**) is a movable sleeve configured to slide over the elongated pole (**104**, **204, 304, 404**).

5. The pruning tool (**100**, **200, 300, 400**) according to claim 1, wherein the second actuation handle (**154**, **252, 352, 438**) is a movable sleeve configured to slide over the elongated pole (**104**, **204, 304, 404**).

6. The pruning tool (**100**, **200, 300, 400**) according to claim 1, wherein the first actuation handle (**240**, **340**) is an actuation knob (**240**, **340**) configured to pull away from the elongated pole (**204**, **304**).

7. The pruning tool according to claim 1, wherein the second actuation handle (**341**) is an actuation knob (**341**) configured to pull away from the elongated pole (**304**).

8. The pruning tool (**100**, **200**, **300**, **400**) according to claim 1, wherein the working implement (**102**, **202**, **302**, **402**) is a cutting assembly having at least one movable blade (**108**, **208, 308, 408, 410**).

9. The pruning tool (**100**, **200, 300**) according to claim 8, wherein the cutting assembly comprises a stationary blade (**110**, **210, 310**) and wherein the at least one movable blade (**108**, **208, 308**) is pivotally connected to the stationary blade (**110**, **210, 310**).

10. The pruning tool (**100**, **200, 300, 400**) according to claim 8, further comprising a drive mechanism (**124**, **216, 316, 418**) operatively connected to the at least one movable blade (**108**, **208, 308, 408, 410**).

## Patentansprüche

1. Gartenschneidwerkzeug (**100**, **200, 300, 400**), umfassend:
ein Arbeitsgerät (**102**, **202, 302, 402**) mit mindestens einer beweglichen Komponente (**108**, **208, 308, 408, 410**);
eine längliche Stange (**104**, **204, 304, 404**), die an dem Arbeitsgerät (**102**, **202, 302, 402**) angebracht ist;
eine verschiebbare Riemenscheibenanordnung (**138**, **228, 328, 428**), die in Bezug auf die längliche Stange (**104**, **204, 304, 404**) verschiebbar angeordnet ist und wobei eine Gleitbewegung der verschiebbaren Riemenscheibenanordnung (**138**, **228, 328, 428**) konfiguriert ist, um das Arbeitsgerät (**102**, **202, 302, 402**) zu betätigen;
mindestens eine Zugseilanordnung (**146**, **244, 344, 362, 430**), die um die verschiebbare Riemenscheibenanordnung (**138**, **228, 328, 428**) verläuft und ein erstes Ende (**148**, **246, 346, 364, 432**) und ein zweites Ende (**150**, **248, 348, 366, 434**) aufweist;
einen ersten Betätigungsgriff (**152**, **250, 350, 340, 436**), wobei das erste Ende (**148**, **246, 346, 364, 432**) der Zugschnur (**146**, **244, 344, 362, 430**) an dem ersten Betätigungsgriff (**152**, **250, 350, 340, 436**) befestigt ist; und
einen zweiten Betätigungsgriff (**154**, **252, 352, 341, 438**), wobei das zweite Ende (**150**, **248, 348, 366, 434**) der Zugschnur (**146**, **244, 344, 362, 430**) an dem zweiten Betätigungsgriff (**154**, **252, 352, 341, 438**) befestigt ist,
**dadurch gekennzeichnet, dass**
während eines ersten Schneidvorgangs, der durch Ziehen des ersten Betätigungsgriffs (**152**, **250, 350, 340, 436**) ausgeführt wird, der zweite Betätigungsgriff (**154**, **252, 352, 341, 438**) so konfiguriert ist, dass er sich zusammen mit dem ersten Betätigungsgriff (**152**, **250, 350, 340, 436**) bewegt, und während eines zweiten Schneidvorgangs, der durch Ziehen des zweiten Betätigungsgriffs (**154**, **252, 352, 341, 438**) ausgeführt wird, der zweite Betätigungsgriff (**154**, **252, 352, 341, 438**) so konfiguriert ist, dass er sich bewegt, während die Bewegung des ersten Betätigungsgriffs (**152**, **250, 350, 340, 436**) eingeschränkt ist.

2. Gartenschneidwerkzeug (**100**, **200, 300, 400**) nach Anspruch 1 umfasst ein Anhaltemittel (**162**, **260, 360, 448**), um die Bewegung des ersten Betätigungsgriffs (**152**, **250, 350, 436**) während des zweiten Schneidvorgangs zu begrenzen.

3. Gartenschneidwerkzeug (**100**, **200, 300, 400**) nach Anspruch 2, wobei das Anhaltemittel (**162**, **260, 360, 448**) ein integrales Anhaltemittel ist, das mit dem ersten Betätigungsgriff (**152**, **250**, **350**, **436**) bereitgestellt wird.

4. Gartenschneidwerkzeug (**100**, **200, 300, 400**) nach Anspruch 1, wobei der erste Betätigungsgriff (**152**, **250, 350, 436**) eine bewegliche Hülse ist, die so konfiguriert ist, dass sie über den die längliche Stange gleitet (**104**, **204, 304, 404**).

5. Gartenschneidwerkzeug (**100**, **200, 300, 400**) nach Anspruch 1, wobei der zweite Betätigungsgriff (**154**, **252, 352, 438**) eine bewegliche Hülse ist, die so konfiguriert ist, dass sie über die längliche Stange gleitet (**104**, **204, 304, 404**).

6. Gartenschneidwerkzeug (**100**, **200**, **300**, **400**) nach Anspruch 1, wobei der erste Betätigungsgriff (**240**, **340**) ein Betätigungsknopf (**240**, **340**) ist, der so konfiguriert ist, dass er von der länglichen Stange (**204**, **304**) wegzieht.

7. Gartenschneidwerkzeug nach Anspruch 1, wobei der zweite Betätigungsgriff (**341**) ein Betätigungsknopf (**341**) ist, der so konfiguriert ist, dass er von dem länglichen Pfosten (**304**) wegzieht.

8. Gartenschneidwerkzeug (**100**, **200**, **300**, **400**) nach Anspruch 1, wobei das Arbeitsgerät (**102**, **202, 302, 402**) eine Schneidanordnung mit mindestens einer beweglichen Klinge (**108**, **208, 308, 408, 410**) ist.

9. Gartenschneidwerkzeug (**100**, **200, 300**) nach Anspruch 8, wobei die Schneidanordnung eine feststehende Klinge (**110**, **210, 310**) umfasst und wobei die mindestens eine bewegliche Klinge (**108**, **208, 308**) schwenkbar mit der feststehenden Klinge (**110**, **210, 310**) verbunden ist.

10. Gartenschneidwerkzeug (**100**, **200, 300, 400**) nach Anspruch 8, ferner umfassend einen Antriebsmechanismus (**124**, **216, 316, 418**), der mit der mindestens einen beweglichen Klinge (**108**, **208, 308, 408, 410**) wirkverbunden ist.

## Revendications

1. Un outil d'élagage (100, 200, 300, 400) comprenant:
un outil de travail (102, 202, 302, 402) ayant au moins un composant mobile (108, 208, 308, 408, 410);
un poteau allongé (104, 204, 304, 404) fixé à l'outil de travail (102, 202, 302, 402);
un agencement de poulie coulissante (138, 228, 328, 428) disposé de manière coulissante par rapport au poteau allongé (104, 204, 304, 404) et dans lequel un mouvement de coulissement de l'agencement de poulie coulissante (138, 228, 328, 428) est configuré pour actionner l'outil de travail (102, 202, 302, 402);
au moins une corde de traction (146, 244, 344, 362, 430) passant autour de l'agencement de poulie coulissante (138, 228, 328, 428) ayant une première extrémité (148, 246, 346, 364, 432) et une deuxième extrémité (150, 248, 348, 366, 434);
une première poignée d'actionnement (152, 250, 350, 340, 436), la première extrémité (148, 246, 346, 364, 432) de la corde de traction (146, 244, 344, 362, 430) fixée à la première poignée d'actionnement (152, 250, 350, 340, 436); et
une deuxième poignée d'actionnement (154, 252, 352, 341, 438), la deuxième extrémité (150, 248, 348, 366, 434) de la corde de traction (146, 244, 344, 362, 430) fixée à la deuxième poignée d'actionnement (154, 252, 352, 341, 438),
**caractérisé en ce que**
lors d'une première action de coupe effectuée en tirant la première poignée d'actionnement (152, 250, 350, 340, 436) la deuxième poignée d'actionnement (154, 252, 352, 341, 438) est configurée pour se déplacer avec la première poignée d'actionnement (152, 250, 350, 340, 436), et lors d'une deuxième action de coupe effectuée en tirant la deuxième poignée d'actionnement (154, 252, 352, 341, 438) la deuxième poignée d'actionnement (154, 252, 352, 341, 438) est configurée pour se déplacer pendant que le mouvement de la première poignée d'actionnement (152, 250, 350, 340, 436) est limité.

2. L'outil d'élagage (100, 200, 300, 400) selon la revendication 1 comprend un moyen d'arrêt (162, 260, 360, 448) pour restreindre le mouvement de la première poignée d'actionnement (152, 250, 350, 436) pendant la deuxième action de coupe.

3. L'outil d'élagage (100, 200, 300, 400) selon la revendication 2, dans lequel le moyen d'arrêt (162, 260, 360, 448) est un moyen d'arrêt fourni intégralement avec la première poignée d'actionnement (152, 250, 350, 436).

4. L'outil d'élagage (100, 200, 300, 400) selon la revendication 1, dans lequel la première poignée d'actionnement (152, 250, 350, 436) est un manchon mobile configuré pour coulisser sur le poteau allongé (104, 204, 304, 404).

5. L'outil d'élagage (100, 200, 300, 400) selon la revendication 1, dans lequel la deuxième poignée d'actionnement (154, 252, 352, 438) est un manchon mobile configuré pour coulisser sur le poteau allongé (104, 204, 304, 404).

6. L'outil d'élagage (100, 200, 300, 400) selon la revendication 1, dans lequel la première poignée d'actionnement (240, 340) est un bouton d'actionnement (240, 340) configuré pour s'éloigner du poteau allongé (204, 304).

7. L'outil d'élagage selon la revendication 1, dans lequel la deuxième poignée d'actionnement (341) est un bouton d'actionnement (341) configuré pour s'éloigner du poteau allongé (304).

8. L'outil d'élagage (100, 200, 300, 400) selon la revendication 1, dans lequel l'outil de travail (102, 202, 302, 402) est un ensemble de coupe ayant au moins une lame mobile (108, 208, 308, 408, 410).

9. L'outil d'élagage (100, 200, 300) selon la revendication 8, dans lequel l'ensemble de coupe comprend une lame stationnaire (110, 210, 310) et dans lequel l'au moins une lame mobile (108, 208, 308) est connectée de manière pivotante à la lame stationnaire (110, 210, 310).

10. L'outil d'élagage (100, 200, 300, 400) selon la revendication 8, comprenant en outre un mécanisme d'entraînement (124, 216, 316, 418) relié de manière opérationnelle à l'au moins une lame mobile (108, 208, 308, 408, 410).
